Europäisches Patentamt

European Patent Office

Office européen des brevets

(11) Numéro de publication: **0 134 315**
**B1**

## FASCICULE DE BREVET EUROPEEN

(45) Date de publication du fascicule du brevet: **18.05.88**

(51) Int. Cl.⁴: **G 21 C 19/02**

(21) Numéro de dépôt: **83201278.5**

(22) Date de dépôt: **06.09.83**

(54) **Procédé de surveillance et de contrôle de chargement et de déchargement du combustible d'un réacteur nucléaire et le dispositif appliquant ce procédé.**

(43) Date de publication de la demande:
**20.03.85 Bulletin 85/12**

(45) Mention de la délivrance du brevet:
**18.05.88 Bulletin 88/20**

(84) Etats contractants désignés:
**AT BE CH DE FR GB IT LI LU NL SE**

(56) Documents cités:
**DE-A-3 224 700**
**GB-A- 984 507**

**NUCLEAR ENGINEERING INTERNATIONAL,
vol. 26, no. 315, juillet 1981, pages 42-44,
Sutton, Surrey, GB; B.FONTAINE et al.: "Swiss
station will be semi-automated"**

**NUCLEAR ENGINEERING INTERNATIONAL,
vol. 26, no. 310, mars 1981, pages 23-24,
Sutton, Surrey, GB; N.ITOH et al.: "Japan
engages in automatic refuelling"**

**PATENTS ABSTRACTS OF JAPAN, vol. 2, no.
21, 10 février 1978, page 7287 M 77 &
JP-A-52135992**

Le dossier contient des informations
techniques présentées postérieurement au
dépôt de la demande et ne figurant pas dans le
présent fascicule.

(73) Titulaire: **ACEC, Société Anonyme
Avenue Lloyd George 7
B-1050 Bruxelles (BE)**

(72) Inventeur: **Plumier, Michel
19, rue de la Petite Corniche
B-6428 Ham-sur-Heure (BE)**

(56) References cited:
**IEEE TRANSACTIONS ON NUCLEAR SCIENCE,
vol. NS-20, no. 1, février 1973, IEEE, New York,
US; C.W.SMITH et al.: "Computer-controlled
refueling machine at fort St.Vrain"**

**PATENTS ABSTRACTS OF JAPAN, vol. 2, no.
21, 10 février 1978, page 7332 M 77 &
JP-A-52137592**

Courier Press, Leamington Spa, England.

## Description

Un coeur de réacteur nucléaire est composé d'assemblages de section carrée ou hexagonale, constitués chacun d'un faisceau de crayons renfermant la matière fissile. Ces assemblages sont disposés côte à côte dans le coeur de réacteur suivant un réseau à pas carré ou triangulaire.

Afin de conduire à la meilleure utilisation possible du combustible nucléaire et pour éviter des pointes de flux excessives, la disposition des assemblages fait l'objet d'un prédétermination par calcui, généralement appelée plan de chargement du coeur du réacteur.

Lors du premier chargement du coeur du réacteur, les assemblages frais, non encore irradiés, sont répartis en régions selon des taux d'enrichissement en matière fissile différents qui sont spécifiés de façon à réaliser une distribution de puissance aussi uniforme que possible.

Après un cycle d'irradiation, généralement de l'ordre d'une année, chaque assemblage a débité une quantité d'énergie variable selon le taux initial d'enrichissement en matière fissile et selon la position occupée dans le coeur du réacteur. Il faut alors procéder au remplacement d'un certain nombre d'assemblages ne possédant plus qu'un faible potentiel de libération d'énergie par un nombre égal d'assemblages frais. En outre de façon à uniformiser la distribution de puissance on attribue à chaque assemblage de nouvelles coordonnées, voire même une orientation différente dans le coeur de réacteur. Cette nouvelle disposition est évidemment l'objet d'un nouveau plan de chargement également établi par calculs et déterminant pour chaque assemblage un nouveau jeu de coordonnées.

Pour amener la disposition des assemblages en conformité avec le nouveau plan de chargement il faut procéder à toute une série de manipulations pour retirer les assemblages épuisés, ramener des assemblages frais, permuter le reste des assemblages dans le coeur du réacteur.

Souvent la réorganisation des assemblages dans le coeur doit s'accompagner d'une permutation d'autres composants du coeur, tels que barres de réglages, sources, grappes de bouchons, de poisons, etc. ....

Toutes ces opérations conduisent à un état final pour lequel le coeur du réacteur contient un amalgame d'assemblages irradiés et d'assemblages frais correspondant à une nouveau plan de chargement avec, pour chaque assemblage du coeur, une position spécifiée par de nouvelles coordonnées. Les modifications intervenues dans le coeur du réacteur se répercutent évidemment à la fois dans la piscine du réacteur où se trouve un ratelier tampon et dans la piscine de désactivation où se situent les rateliers de stockage.

Cet ensemble de manipulations doit se faire suivant une procédure rigoureuse appelée séquence de chargement.

La séquence de chargement comporte une suite d'instructions à exécuter dans un ordre rigoureux l'une après l'autre. Selon le type et la taille du réacteur, une séquence de chargement comprend un nombre variable d'instructions parfois supérieur à 500. Ces instructions sont donnés aux opérateurs des machines de manipulation des assemblages. Chaque instruction porte un numéro d'ordre, l'identification de chaque assemblage ou composant concerné par la manipulation, la localisation de départ et la localisation de destination. La séquence de chargement minutieusement préparée à l'avance et correctement exécutée conduit à un plan de chargement réel qui sera identique au plan de chargement spécifié.

Il est important que le plan de chargement réel soit vérifié pour se prémunir contre toute erreur de chargement que pourrait entraîner des points chauds inacceptables et une mauvaise utilisation du combustible nucléaire.

Actuellèment la vérification est double. Dans une première phase de vérification, survenant en fin de séquence de chargement chaque assemblage immergé dans le coeur du réacteur est vérifié par un moyen optique pour s'assurer de la parfaite correspondance entre le plan de chargement réel et le plan de chargement calculé. Il faut notamment s'assurer que le numéro d'identification gravé sur la tête de l'assemblage correspond à celui qui est spécifié pour cette position dans le plan de chargement spécifié. Compte tenu de la nature subjective de cette première vérification et des difficultés inhérentes à la lecture des numéros d'identification suite à l'état d'encrassement des assemblages ou au manque de limpidité de l'eau, une seconde phase de vérification est prévue après remise en état du réacteur. Lorsque la cuve est refermée, que les connections sont rétablies et que le réacteur, ramené aux conditions nominales de pression et de température, a dépassé l'état critique, on effectue une campagne de distribution du flux neutronique dans le coeur pour comparer aux valeurs calculées et ainsi valider l'état du coeur du réacteur avant de monter en puissance. Si cette seconde phase de vérification révèle une erreur il faut alors recommencer tout le chargement et consentir à un arrêt supplémentaire de plusieurs jours.

L'invention comme revendiquée dans les revendications 1—3 élimine les inconvénients précités. Elle consiste en un procédé qui, au départ d'un état initial validé permet de connaître l'état final du coeur du réacteur de façon non équivoque grâce à un contrôle et à l'enregistrement de chaque opération effectivement exécutée selon une séquence de chargement souvent complexe tenant compte de tous les mouvements dans le coeur du réacteur, dans la piscine du réacteur, au travers du tunnel de transfert et dans la piscine de désactivation.

Ce procédé répond à l'exigence d'avoir à la fin de la séquence de chargement une correspondance rigoureuse entre le plan de chargement réel et le plan de chargement calculé en ce qui concerne l'identité des assemblages et des composants et les coordonnées de leur localisation dans le coeur du réacteur et dans les rateliers de stockage de la piscine de désactivation.

Il présente l'avantage d'agir en élément de contrôle indépendant pour des opérations exécutées généralement manuellement par plusieurs opérateurs qui peuvent dans certaines conditions ne pas se comprendre. Ce procédé rend compte des coordonnées x, y, z des têtes de préhension des machines de chargement, de leur position angulaire, de l'ouverture des pinces, de la vitesse de déplacement des machines, des obstacles fixes ou mobiles, des éléments irradiés à enlever ou à permuter dans le coeur du réacteur, des éléments frais à y introduire et de toutes les manipulations qui en découlent dans la piscine du réacteur, dans la piscine de stockage et dans le tube de transfert situé entre la piscine de désactivation et la piscine du réacteur.

Dans une première application le procédé conduit au départ d'un état initial validé à un état final du coeur du réacteur avec annulation de toutes les opérations intermédiaires. Une seconde application conserve, au contraire, toutes les opérations intermédiaires pour permettre au contrôle à postériori en cas de besoin.

Enfin ce procédé présente l'avantage de faire un essai à blanc, c'est-à-dire faire une simulation de la séquence de chargement préétablie, et de vérifier si la séquence de chargement préétablie conduit effectivement au nouveau plan de chargement spécifié.

Dans une version plus sophistiquée, on peut asservir la motorisation des machines de chargement à la séquence préétablie et obtenir ainsi une automatisation complète des manipulations.

Les dispositifs comme revendiquées dans les revendications 4—8 appliquant ce procédé comportent des alarmes qui, pour les obstacles fixes, travaillent en redondance de l'appareillage susceptible de tomber en panne et, pour des obstacles temporaires, sont faciles à introduire par un nouveau point de consigne d'alarme correspondant aux côtés de l'obstacle temporaire.

Chaque machine susceptible de manipuler des assemblages est munie de codeurs de position et de rotation du mat, elle dispose en outre de moyens de détecter la présence d'une charge.

Tous les signaux générés sont envoyés vers un processeur d'informations qui gère tous les signaux. Ce processeur peut connaître la position d'extraction et d'insertion de tous les éléments. Grâce à l'enregistrement de chaque mouvement on peut à tout moment par des moyens informatiques et pour chacune des piscines considérées:

— éditer une carte de position qui en fin de séquence constituera le nouveau plan de chargement du coeur du réacteur et des rateliers de stockage

— connaître les positions libres et les positions déjà occupées pour prévenir tout accident de manipulations,

— conserver à postériori une trace de toutes les opérations,

— anticiper chaque pas de la séquence et vérifier s'il est possible de l'exécuter,

— effectuer au préalable une exécution à blanc de toute la séquence pour vérifier si elle conduit au plan de chargement calculé,

— éviter toute collision d'une charge manipulée avec un obstacle fixe ou mobile,

L'invention est exposée plus en détail à l'aide des figures suivantes.

La figure 1 montre un schéma d'ensemble.

La figure 2 est un exemple d'un plan de chargement pour des assemblages frais.

La figure 3 est un exemple d'un plan de chargement pour des assemblages frais et irradiés.

La figure 4 donne un schéma de principe du dispositif.

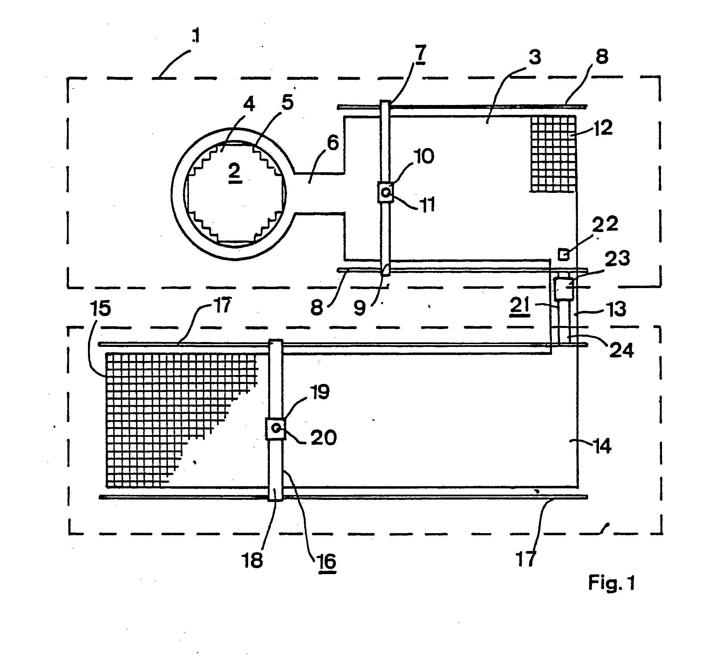

La figure 1 représente le schéma d'une installation nucléaire. Une enceinte 1 abrite un réacteur 2 et une piscine de réacteur 3. Le réacteur 2 comporte un coeur 4 situé à l'intérieur d'une cuve 5. Un canal de rechargement 6 réunit le réacteur 2 à la piscine de réacteur 3. La piscine de réacteur 3 et le réacteur 2 sont desservis par une machine de chargement 7 se déplaçant sur des rails 8. La machine de chargement 7 est constituée d'un pont 9 sur lequel se déplace un chariot 10. Ce chariot 10 comporte un mât télescopique 11 garni de pinces d'extrémité servant à l'accrochage des assemblages du coeur 4 du réacteur 2. Dans la piscine du réacteur 3 se trouve un ratelier tampon 12 servant à entreposer provisoirement les assemblages à permuter dans le coeur du réacteur.

Un tube de transfert 13 assure la liaison entre la piscine du réacteur 3 et une piscine de désactivation 14 dans laquelle se trouvent des rateliers de stockage 15.

La piscine de désactivation 14 est desservie par une machine de manutention 16 qui se déplace sur des rails 17. Dans l'exemple repris à la figure 1, la machine de manutention 16 est constituée d'un pont 18 sur lequel se déplace un chariot 19. Le chariot 19 comporte également un mât télescopique 20 muni de pinces d'extrémité pour la manipulation des assemblages.

Le tube de transfert 13 est desservi par une machine de transfert 21 comportant un panier de transfert 22 qu'un dispositif bascule à l'horizontale pour le placer sur un chariot 23 se déplaçant sur des rails 24. La fonction de cette machine de transfert 21 est de procéder à un transport individuel d'assemblage entre la piscine de réacteur 3 et la piscine de désactivation 14.

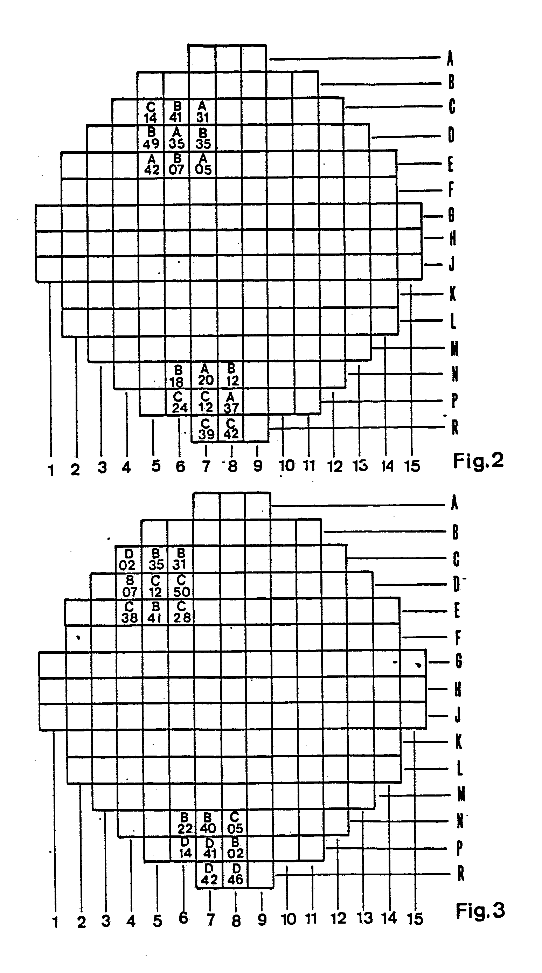

Les figures 1 et 2 nous permettent de suivre un premier exemple schématique de manipulations. Supposons qu'au cours d'une séquence de chargement un assemblage A35 de coordonnées 6D situé dans le coeur 4 du réacteur soit transféré dans la piscine de désactivation 14 pour être remplacé par un autre assemblage C12 de coordonnées 7P. L'emplacement de coordonnées 7P étant lui-même occupé par après par un assemblage frais D41.

Pour effectuer ces manipulations, la machine de déchargement 7 extrait d'abord l'assemblage A35 pour le disposer dans le panier 22 de la machine de transfert 21. Après basculement du panier 22 le chariot 23 transfère le panier chargé de l'assemblage A35 de la piscine de réacteur 3 à la piscine de désactivation 14. La machine de manutention 16 prend l'assemblage A35 hors du panier de transfert 22 pour le déposer dans un emplacement libre du ratelier de stockage 15, par exemple en NL22.

La machine de chargement 7 extrait ensuite l'assemblage C12 de son emplacement de coordonnées 7P et le dépose à l'emplacement devenu libre de coordonnées 6D.

Après quoi, la machine de manutention 16 prend l'assemblage frais D41 dans le ratelier de stockage 15 et le dépose dans le panier de transfert 22. Ensuite, la machine de transfert 21 amène l'assemblage D41 dans la piscine du réacteur 3. La machine de chargement 7 extrait alors l'assemblage D41 du panier de transfert 22 et le dépose dans le coeur 4 à l'emplacement de coordonnées 7P. A la manipulation d'assemblages peut se superposer une manipulation de composants tels que barres de réglage ou grappes de poisons effectuée à l'aide d'un poste mobile de dépose situé dans la piscine du réacteur 3.

Dans le procédé de contrôle généralement utilisé en centrale nucléaire chaque manipulation constitue un pas de séquence de chargement consigné dans un listing de chargement qui reprend un par un toute une suite d'ordres administratifs préétablis sur lequel un préposé note l'heure de début et de fin de la manipulation et valide l'opération par sa signature. Ce contrôle ne porte que sur des ordres administratifs consignés dans le listing de chargement. La bonne exécution des manipulations repose sur l'exécution scrupuleuse des ordres administratifs. A ce niveau peuvent donc se glisser des erreurs de manipulation dues soit à un ordre administratif mal rédigé, soit à un ordre mal exécuté par l'opérateur, soit à une exécution fautive de la machine malgré une commande bien exécutée par l'opérateur.

Toutes ces erreurs sont radicalement éliminées dans le procédé selon l'invention revendiquée.

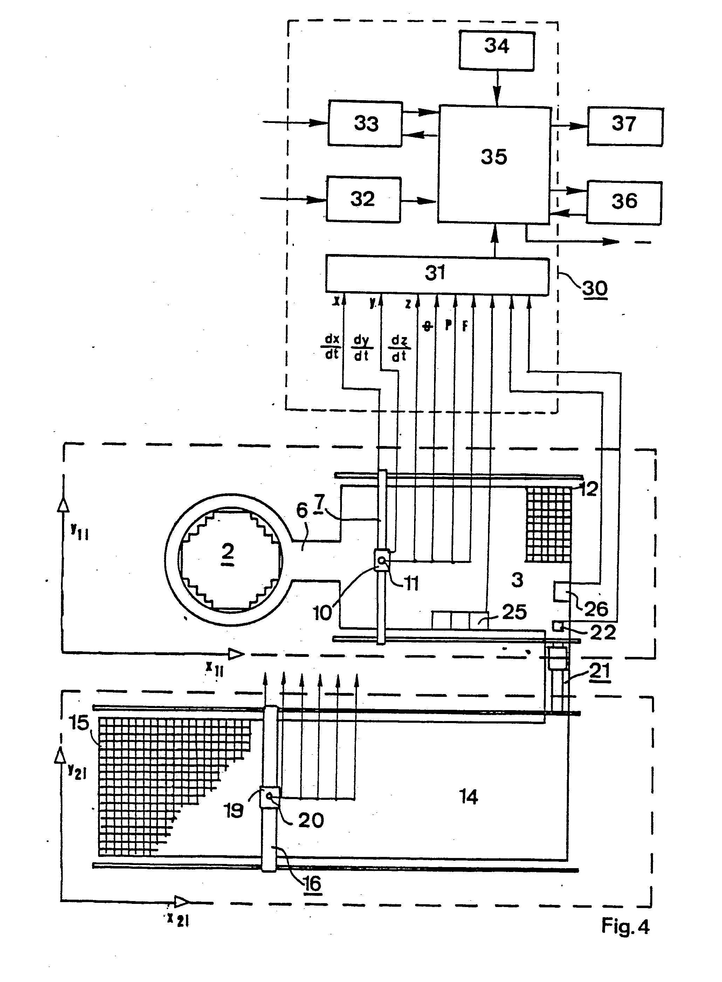

Comme représenté en figure 4, affectons à l'enceinte du réacteur un système d'axes $x_{1i}$, $y_{1i}$ permettant de situer avec précision les assemblages dans le réacteur 2, dans le ratelier tampon 12, dans le panier de transfert 22 et dans tout autre dispositif auxiliaire équipant la piscine de réacteur 3, tel qu'un poste mobile de dépose 25 utilisé pour faire des permutations de composants au sein de certains assemblages, ou un poste fixe de dépose 26 servant aux essais de ressuage pour détecter dans un assemblage les avaries survenues aux crayons constitutifs de l'assemblage.

Affectons à la piscine de désactivation 14 un autre système d'axes $x_{2i}$, $y_{2i}$ permettant de situer avec précision les assemblages dans le ratelier de stockage 15 et dans le panier de transfert 22, lorsque ce dernier se trouve effectivement dans la piscine de désactivation 14. Les coordonnées $x_{1i}$, $y_{1i}$ et $x_{2i}$, $y_{2i}$, qui permettent d'établir la localisation dans le plan, sont complétées par des coordonnées z qui situent en profondeur les assemblages, les têtes de préhension de la machine de chargement 7 et de la machine de manutention 16 et une perche caméra, non représentée, utilisée pour identifier les assemblages. Ces coordonnées de position x, y, z sont fournies par des codeurs donnant la position absolue, indépendamment de toute panne de courant survenant sur l'installation. Ces codeurs sont par exemple des codeurs optiques entraînés sans glissement par un dispositif mécanique approprié.

Nous avons donc en $x_{1i}$, $y_{1i}$, $z_{1i}$ les coordonnées des emplacements des assemblages dans le coeur 2, le ratelier tampon 12 et le poste fixe de dépose 26 qui sont des coordonnées fixes alors que les coordonnées du poste mobile de dépose 25, du panier de transfert 22 et des batardeaux disposés par exemple dans le canal de rechargement 6 sont des paramètres variables.

De même en $x_{2i}$, $y_{2i}$, $z_{2i}$, les coordonnées des rateliers de stockage 15 sont fixes alors que les coordonnées du panier de transfert 22 sont variables.

Nous pouvons désigner par $x_1$, $y_1$, $z_1$ la position de la tête de préhension de la machine de chargement 7 et par $x_2$, $y_2$, $z_2$ la position de la tête de préhension de la machine de manutention 16.

Les signaux correspondants aux coordonnées x, y, z sont envoyées à un processeur d'informations 30 chargé de leur gestion. De plus, ce processeur d'informations 30 reçoit des informations sur la vitesse de déplacement

$$\frac{dx,}{dt,} \quad \frac{dy,}{dt,} \quad \frac{dz}{dt}$$

et l'orientation θ des têtes de préhension de la machine de chargement 7 et de la machine de manutention 16, sur la charge P et le degré d'ouverture F des pinces de ces machines. Sont également communiqués à ce processeur d'informations 30 les marques d'identification des assemblages, les plans de chargement et la séquence de chargement.

Toutes ces informations ne sont pas traitées de la même manière. Pour cela, il faut distinguer dans le processeur d'informations 30 une unité de traitement 31 chargée de reconnaître et de traiter les signaux $x_1$, $y_1$, $z_1$,

$$\frac{dx_1,}{dt} \quad \frac{dy_1,}{dt} \quad \frac{dz_1}{dt}$$

$\theta_1$, $P_1$, $F_1$ caractérisant la tête de préhension de la machine de chargement 7 et les signaux $x_{2i}$, $y_{2i}$, $z_{2i}$,

$$\frac{dx_2,}{dt} \quad \frac{dy_2,}{dt} \quad \frac{dz_2}{dt}$$

$\theta_2$, $P_2$, $F_2$ caractérisant la tête de préhension de la machine de manutention 16.

Les coordonnées fixes $x_{1i}$, $y_{1i}$, $z_{1i}$ des emplacements pour les assemblages dans le coeur 2, le ratelier tampon 12 et le poste fixe de dépose 26 de la piscine de réacteur 3 sont enregistrées de manière permanente dans une unité à mémoire permanente 32. L'unité à mémoire permanente 32 reçoit également les coordonnées fixes $x_{2i}$, $y_{2i}$, $z_{2i}$ du ratelier de stockage 15 de la piscine de désactivation 14.

Par contre, les coordonnées du poste mobile de dépose 25, du panier de transfert 22, des batardeaux de la piscine de réacteur 3, ainsi que les marques d'identification des assemblages et leur position occupée dans le coeur 2 et dans les rateliers de stockage 15 sont enregistrées de manière temporaire dans une unité à mémoire temporaire 33.

Lors du premier chargement, il y a lieu pour la première initiation de relever les coordonnées de tous les emplacements prévus pour ces assemblages, ainsi que la position initiale et l'identification de chaque assemblage et d'introduire ces valeurs dans les unités de mémoire 32 et 33.

Quant à la séquence de chargement, elle est fournie à une unité programmable 34.

Les signaux traités dans les différentes unités 31, 32, 33 et 34, qui constituent le processeur d'informations 30 sont ensuite transmis à une unité centrale de calculs 35 qui est en liaison avec un système conversationnel 36.

Lors du déroulement de la séquence de chargement, chaque pas exécuté est enregistré dans une boîte de contrôle 37 pour servir de référence soit à un organisme spécialisé chargé de la surveillance des combustibles dans la centrale, soit au personnel de la centrale pour procéder à des vérifications ou à des contrôles de manipulation.

A chaque instant l'unité centrale de calculs 35 compare les valeurs fournies par l'unité à mémoire permanente 32, par l'unité à mémoire temporaire 33 et par l'unité programmable 34 avec celles issues de l'unité de traitement 31 pour déterminer les chemins de déplacement des têtes de préhension des machines 7 et 16 en tenant compte des obstacles permanents et temporaires.

D'autre part en comparant les valeurs fournies par l'unité à mémoire temporaire 33 et par l'unité à mémoire permanente 32 à celles fournies par l'unité programmable 34, l'unité centrale de calculs 35 peut selon le résultat de la comparaison autoriser ou refuser le pas de séquence engagé et mettre en mémoire tous les calculs validés à la fois dans l'unité à mémoire temporaire 33 et dans le système conversationnel 36 pour tenir compte de l'évolution de la séquence de chargement. L'unité centrale de calculs 35 établit à chaque instant la comparaison entre la position recherchée et la position réelle de l'assemblage manipulé. Si par exemple, l'unité centrale de calculs 35 constate que la machine de manutention 16 est sur le point de descendre un assemblage à un emplacement erroné, l'unité centrale de calculs 35 envoie un signal négatif qui annule l'ordre demandé. Cela se traduit par une alarme et éventuellement par un blocage du mouvement de descente de façon à éviter des conséquences graves résultant par exemple de la dépose d'un second assemblage sur un premier déjà en place avec basculement du second assemblage et risque de destruction d'assemblages.

Ce nouveau procédé offre l'avantage d'enregistrer les mouvements réels de la machine de chargement 7 et de la machine de manutention 16. Il mémorise les positions successives réellement occupées par les assemblages dans les piscines et le réacteur et non les positions souhaitées dans une suite d'ordres administratifs.

En outre, la séquence préétablie fournie à l'unité programmable 34 et transmise à l'unité centrale de calculs 35 permet de faire un essai à blanc, c'est-à-dire une simulation de la séquence de chargement préétablie, pour vérifier si elle conduit effectivement au plan de chargement spécifié. Cette caractéristique représente évidemment un énorme avantage pour les exploitants de centrales nucléaires.

Les ordres admis par l'unité centrale de calculs 35 sont mémorisés de deux façons différentes. Une première mémoire dite boîte de contrôle 37 enregistre fidèlement tous les mouvements exécutés pour permettre, en cas de besoin, de faire l'analyse détaillée des différentes opérations.

Une seconde mémoire installée dans l'unité à mémoire temporaire 33 est conçue pour conserver la dernière position acquise par chaque assemblage en effaçant les positions occupées antérieurement. De la sorte, à la fin de la séquence de chargement, elle donne le nouveau plan de chargement effectivement réalisé en reproduisant exactement l'emplacement et l'identification de chaque assemblage dans le coeur 2 et dans le ratelier de stockage 15. Obenu sur base de contrôle des opérations effectivement exécutées, le nouveau plan de chargement donne une garantie totale sur l'exactitude de la configuration.

Dans le système conversationnel 36, on dispose d'écrans vidéo et de claviers d'introduction de données pour permettre:

— le dialogue entre le personnel de conduite et le processeur d'informations 30

— la visualisation des ordres d'exécution de mouvement

— l'évolution, à tout moment, du plan de chargement donnant l'emplacement et l'identification de tous les assemblages, à savoir dans l'exemple traité, dans le coeur 2, dans le ratelier tampon 12, dans le poste mobile de dépose 25, dans le panier 22, dans le poste fixe de dépose 26, dans le ratelier de stockage 15

— la visualisation du schéma de chaque piscine donnant la position des obstacles, des têtes de préhension et éventuellement le chemin de déplacement des têtes de préhension

— l'introduction dans la séquence de chargement, fournie au préalable à l'unité programmable 34, d'une modification de séquence pour répondre à un nouveau besoin.

Dans un système plus évolué, on peut envisager un fonctionnement entièrement automatique du chargement. Il suffit d'asservir la motorisation des machines à la séquence préétablie. Le fonctionnement automatique peut impliquer le choix et l'exécution des chemins les plus appropriés pour le déplacement des têtes de préhension des machines 7 et 16.

**Revendications**

1. Procédé de surveillance et de contrôle des opérations de chargement et de déchargement, en assemblages d'éléments de combustible nucléaire, d'un coeur (4) d'une réacteur (2), d'une piscine de réacteur (3) et d'une piscine de désactivation (14) à l'aide d'une machine de chargement (7) équipée d'un mât télescopique (11), dont l'extrémité est munie d'une tête de préhension avec pinces, desservant le réacteur (2) et la piscine de réacteur (3) dans laquelle est interposée un ratelier de stockage tampon (12), un poste fixe de dépose (26) et un poste mobile de dépose (25), d'une machine de chargement (16) équipée d'un mât télescopique (20), dont l'extrémité est munie d'une tête de préhension avec pinces, desservant la piscine de désactivation (14) contenant des rateliers de stockage (15) et d'un dispositif de transfert (21) assurant la liaison entre la piscine de réacteur (3) et la piscine de désactivation (14), caractérisé en ce qu'on enregistre la position initiale de chaque assemblage dans le coeur (4) du réacteur (2), dans les rateliers de stockage (15) et éventuellement dans le ratelier tampon (12), en ce qu'on enregistre la position de la machine de chargement (7) et/ou de la machine de manutention (16) et/ou du dispositif de transfert (21) et/ou du poste mobile de dépose (25) et l'identification de l'assemblage au moment de chaque prise en charge d'assemblage et/ou au moment de chaque pose d'assemblage dans le coeur (4) du réacteur (2), dans le ratelier tampon (12), dans le panier de transfert (22), dans le ratelier de stockage (15) dans le poste fixe de dépose (26) et dans le poste mobile de dépose (25) en ce qu'on compare les signaux de commande et de contrôle de chaque manipulation demandée à la machine de chargement (7), à la machine de manutention (16), au dispositif de transfert (21) et à tout autre poste mobile (25) aux signaux enregistrés d'une séquence de chargement préétablie en ce qu'on procède à l'exécution du mouvement ou en cas de manque de cohérence entre les dits signaux à la mise en route d'une alarme avec blocage éventuel du mouvement engagé par la machine de chargement (7), par la machine de manutention (16), par le dispositif de transfert (21) ou par tout autre poste mobile (25) et en ce qu'on établit un tableau des positions finales de chaque assemblage dans le coeur (4) du réacteur (2), dans les rateliers de stockage (15) et éventuellement dans le ratelier tampon (12) pour constituer un plan de disposition des assemblages dans l'installation.

2. Procédé selon la revendication 1 caractérisé en ce qu'on mémorise les signaux de commande et de contrôle de chaque manipulation exécutée par la machine de chargement (7), par la machine de manutention (16), par le dispositif de transfert (21) et par tout autre poste mobile (25), pour obtenir une trace de tous les mouvements exécutés.

3. Procédé selon l'une des revendications précédentes caractérisé en ce qu'on asservit la motorisation de la machine de chargement (7), de la machine de manutention (16) et du dispositif de transfert (21) selon une séquence de chargement préétablie.

4. Dispositif de surveillance et de contrôle appliquant le procédé selon la revendication 1 caractérisé en ce que les coordonnées et les marques d'identification de chaque assemblage d'une part et les coordonnées des obstacles temporaires d'autre part sont mémorisées dans au moins une unité à mémoire (32, 33) et traitées dans une unité centrale de calculs (35) en ce que la position absolue, l'orientation, la vitesse de déplacement de la tête de préhension montée en bout de la machine de chargement (7) et de la machine de manutention (16), le degré d'ouverture des pinces équipant les têtes de préhension et la charge prise par la machine de chargement (7) et la machine de manutention (16) sont converties en signaux envoyés à une unité de traitement (31) en ce que les coordonnées des emplacements pour les assemblages et les obstacles permanents sont mémorisées dans au moins une unité de mémoire (32, 33) et traitées dans une unité centrale de calculs (35) en ce que la séquence de chargement est fournie à une unité programmable (34) et transmise à l'unité centrale de calculs (35) en ce que les signaux de l'unité de traitement (31) sont transmis pour être comparés dans l'unité centrale de calculs (35) avec les informations fournies par l'unité programmable (34) et être, selon le résultat de cette comparaison, soit enregistrés dans au moins une unité à mémoire (33) soit émis en signal de réaction.

5. Dispositif de surveillance et de contrôle selon la revendication 4 caractérisé en ce que les informations fournies par l'unité programmable (34), encore appelés signaux de commande, et les signaux de l'unité de traitement (31), encore appelés signaux de contrôle, sont, après transmission dans l'unité centrale de calculs (35), intégralement enregistrées dans une unité à mémoire (37).

6. Dispositif de surveillance et de contrôle selon la revendication 4 caractérisé en ce que le signal de réaction émis par l'unité centrale de calculs (35) est un signal d'alarme avec blocage de mouvement à l'approche d'un obstacle.

7. Dispositif de surveillance selon l'une des revendications précédentes caractérisé en ce que l'unité centrale de calculs (35) autorise la mise en route des moyens de motorisation de la machines de chargement (7), de la machine de manutention (16), du dispositif de transfert (21) et du poste mobile de dépose (25), lorsqu'il y a cohérence dans le traitement des informations reçues.

8. Dispositif de surveillance et de contrôle selon l'une des revendications précédentes caractérisé en ce que le système conversationnel (36) peut former en tout ou partie la séquence de chargement et l'introduire dans l'unité programmable (34) en transitant par l'unité centrale de calculs (35).

## Patentansprüche

1. Verfahren zur Überwachung und Kontrolle der Vorgänge zum Beschicken mit Brennstoffkassetten und Entladen eines Kerns (4) eines Reaktors (2), eines Reaktorbeckens (3) und eines Abklingbeckens (14) mit Hilfe einer Beschickungsmaschine (7), die mit einem Teleskopmast (11) ausgerüstet ist, dessen Ende mit einem Greifkopf mit Zangen versehen ist, der den Reaktor (2) und das Reaktorbecken (3) versorgt, wobei in diesem Reaktorbecken (3) ein Puffer-Lagerungsgestell (12), eine feste Absetzstation (26) und eine mobile Absetzstation (25) angeordnet sind, und mit Hilfe einer Handhabungsmaschine (16), die mit einem Teleskopmast (20) ausgerüstet ist, dessen Ende einen Greifkopf mit Zangen aufweist, der das Abklingbecken (14) versorgt, das Lagerungsgestelle (15) und eine Transfervorrichtung (21) enthält, wobei diese Transfervorrichtung (21) für die Verbindung zwischen dem Reaktorbecken (3) und dem Abklingbecken (14) sorgt,

dadurch gekennzeichnet, daß die anfängliche Position jeder Brennstoffkassette in dem Kern (4) des Reaktors (2), in den Lagerungsgestellen (15), und eventuell in dem Puffergestell (12) aufgezeichnet wird,

daß die Position der Beschickungsmaschine (7) und/oder der Handhabungsmaschine (16) und/oder der Transfervorrichtung (21) und/oder der mobilen Absetzstation (25) und die Identifizierung der Brennstoffkassette zum Zeitpunkt jeder Übernahme einer Brennstoffkassette und/oder zum Zeitpunkt jeder Absetzung einer Brennstoffkassette in dem Kern (4) des Reaktors (2), in dem Speichergestell (12), in dem Transferkorb (22), in dem Lagerungsgestell (15), in der festen Absetzstation (26) und in der mobilen Absetzstation (25) aufgezeichnet wird,

daß die Steuer- und Kontrollsignale jeder von der Beschickungsmaschine (7), der Handhabungsmaschine (16), der Transfervorrichtung (21) und einer anderen mobilen Station (25) verlangten Handhabung mit den aufgezeichneten Signalen einer vorher festgelegten Beschickungssequenz verglichen werden,

daß die Bewegung ausgeführt wird, oder, bei fehlender Übereinstimmung zwischen den besagten Signalen, ein Alarm ausgelöst wird mit eventueller Blockierung der von der Beschickungsmaschine (7), der Handhabungsmaschine (16), der Transfervorrichtung (21), oder von einer anderen mobilen Station (25) begonnen Bewegung,

und daß eine Tabelle der Endpositionen jeder Brennstoffkassette in dem Kern (4) des Reaktors (2), in den Lagerungsgestellen (15), und eventuell in dem Puffergestell (12) erstellt wird, um einen Plan mit der Anordnung der Brennstoffkassetten in der Anlage anzufertigen.

2. Verfahren gemäß Anspruch 1, dadurch gekennzeichnet, daß die Steuer- und Kontrollsignale jeder von der Beschickungsmaschine (7), der Handhabungsmaschine (16), der Transfervorrichtung (21), und einer anderen mobilen Station (25) ausgeführten Handhabung gespeichert werden, um die ausgeführten Bewegungen nachträglich verfolgen zu können.

3. Verfahren gemäß einem der vorhergehenden Patentansprüche, dadurch gekennzeichnet, daß der Motorantrieb des Beschickungsmaschine (7), der Handhabungsmaschine (16) und der Transfervorrichtung (21) entsprechend einer vorher festgelegten Beschickungssequenz gesteuert wird.

4. Vorrichtung zur Überwachung und Kontrolle, bei der das Verfahren gemäß dem Anspruch 1 angewendet wird,

dadurch gekennzeichnet, daß einerseits die Koordinaten und die Identifizierungsmarkierungen jeder Brennstoffkassette, und andererseits die Koordinaten der zeitweiligen Hindernisse in mindestens einer Speichereinheit (32, 33) gespeichert werden und in einer zentralen Recheneinheit (35) verarbeitet werden,

daß die absolute Position, die Orientierung, die Verschiebegeschwindigkeit des am Ende der Beschickungsmaschine (7) und der Handhabungsmaschine (16) befestigten Greifkopfes, der Öffnungsgrad der Zangen, mit denen die Greifköpfe ausgerüstet sind, und die von der Beschickungsmaschine (7) und der Handhabungsmaschine (16) aufgenommene Last in Signale umgewandelt werden, die nach einer Verarbeitungseinheit (31) weitergeleitet werden,

daß die Koordinaten der Plätze für die Brennstoffkassetten und die dauernden Hindernisse in mindestens einer Speichereinheit (32, 33) gespeichert werden und in einer zentralen Recheneinheit (35) verarbeitet werden,

daß die Beschickungssequenz in eine programmierbare Einheit (34) eingegeben wird und nach der zentralen Recheneinheit (35) weitergeleitet wird,

daß die Signale der Verarbeitungseinheit (31) nach der zentralen Recheneinheit (35) weitergeleitet werden, um dort mit den von der programmierbaren Einheit (34) gelieferten Informationen verglichen zu werden, und um, je nach dem Ergebnis dieses Vergleichs, entweder in mindestens einer Speichereinheit (33) gespeichert zu werden, oder als Rückwirkungssignal ausgesandt zu werden.

5. Vorrichtung zur Überwachung und Kontrolle gemäß Anspruch 4, dadurch gekennzeichnet, daß die von der programmierbaren Einheit (34) gelieferten Signale, die auch Steuersignale genannt werden, nach Weiterleitung an die zentrale Recheneinheit (35) vollständig in einer Speichereinheit (37) aufgezeichnet werden.

6. Vorrichtung zur Überwachung und Kontrolle gemäß Anspruch 4, dadurch gekennzeichnet, daß das von der zentralen Recheneinheit (35) ausgesandte Rückwirkungssignal ein Alarmsignal mit Bewegungsblockierung bei Annäherung an ein Hindernis ist.

7. Vorrichtung zur Überwachung gemäß einem der vorhergehenden Ansprüche, dadurch gekennzeichnet, daß die zentrale Recheneinheit (35) die Inbetriebsetzung der Motorantriebsmittel der Beschickungsmaschine (7), der Handhabungsmaschine (16), der Transfervorrichtung (21), und der mobilen Absetzstation (25) zuläßt, wenn bei der Verarbeitung der erhaltenen Informationen Übereinstimmung erhalten wird.

8. Vorrichtung zur Überwachung und Kontrolle gemäß einem der vorhergehenden Ansprüche, dadurch gekennzeichnet, daß mit dem Dialogsystem (36) die Beschickungssequenz ganz oder teilweise festgelegt werden kann und auf dem Wege über die zentrale Recheneinheit (35) in die programmierbare Einheit (34) eingegeben werden kann. ·

**Claims**

1. Method for supervising and controlling the charging and discharging operations, in nuclear fuel element assemblies, of a core (4) of a reactor (2), of a reactor pond (3) and of a decontamination pond (14), by means of a charging machine (7) equipped with a telescopic mast (11) the end of which is provided with a gripping head with grippers, serving the reactor (2) and the reactor pond (3) in which there is arranged a buffer storage rack (12), a fixed depositing station (26) and a mobile depositing station (25), and by means of a charging machine (16) equipped with a telescopic mast (20) the end of which is provided with a gripping head with grippers, serving the decontamination pond (14) containing storage racks (15), and by means of a transfer device (21) providing communication between the reactor pond (3) and the decontamination pond (14),

characterised in that the initial position of each assembly in the core (4) of the reactor (2), in the storage racks (15) and possibly in the buffer rack (12) is recorded,

in that the position of the charging machine (7) and/or of the handling machine (16) and/or of the transfer device (21) and/or of the mobile depositing station (25) is recorded, likewise the identification of the assembly at the time of each taking up of an assembly and/or at the time of each placing of an assembly in the core (4) of the reactor (2), in the buffer rack (12) in the transfer basket (22), in the storage rack (15), in the fixed depositing station (26) and in the mobile depositing station (25),

in that the command and control signals for each manipulation required of the charging machine (7), of the handling machine (16), of the transfer device (21) and of any other mobile station (25) are compared with the recorded signals of a preestablished charging sequence,

in that the execution of the movement is proceeded with or, in the event of lack of coherence between the said signals, the actuation of an alarm, with possible blocking of the movement undertaken by the charging machine (7), by the handling machine (16), by the transfer device (21), or by any other mobile station (25),

and in that a table is prepared of the final positions of each assembly in the core (4) of the reactor (2), in the storage racks (15), and possibly in the buffer rack (12) to constitute a disposition plan for the assemblies in the installation.

2. Method according to claim 1, characterised in that the command and control signals of each manipulation executed by the charging machine (7), by the handling machine (16), by the transfer device (21) and by any other mobile station (25), are stored so as to obtain a trace of all the movements carried out.

3. Method according to one of the preceding claims, characterised in that the motorisation of the charging machine (7), of the handling machine (16) and of the transfer device (21) is controlled in accordance with a preestablished charging sequence.

4. Apparatus for supervising and controlling, using the method according to claim 1,

characterised in that the coordinates and the identification marks of each assembly on the one hand and the coordinates of the temporary obstacles on the other hand are stored in at least one storage unit (32, 33) and treated in a central arithmetic unit (35),

in that the absolute position, the orientation, the speed of displacement of the gripping head mounted at the end of the charging machine (7) and of the handling machine (16), the degree of opening of the grippers provided on the gripping heads, and the load taken by the charging machine (7) and the handling machine (16), are converted into signals sent to a processing unit (31),

in that the co-ordinates of the locations for the assemblies and the permanent obstacles are stored in at least one storage unit (32, 33) and processed in a central arithmetic unit (35),

in that the charging sequence is supplied to a programmable unit (34) and transmitted to the central arithmetic unit (35),

in that the signals of the processing unit (31) are transmitted to be compared in the central arithmetic unit (35) with the data furnished by the programmable unit (34) and, depending on the result of this comparison, to be either recorded in at least one storage unit (33) or emitted as a reaction signal.

5. Apparatus for supervising and controlling according to claim 4, characterised in that the data supplied by the programmable unit (34), also called command signals, and the signals of the processing unit (31), also called control signals, are, after transmission into the central arithmetic unit (35), integrally recorded in a storage unit (37).

6. Apparatus for supervising and control according to claim 4, characterised in that the reaction signal emitted by the central arithmetic unit (35) is an alarm signal with blockage of movement on the approach of an obstacle.

7. Apparatus for supervising and controlling according to one of the preceding claims, characterised in that the central arithmetic unit (35) authorises the starting up of the motorisation means of the charging machines (7), the handling machine (16), the transfer device (21) and the mobile depositing station (25), when there is coherence in the processing of the data received.

8. Apparatus for supervising and controlling according to one of the preceding claims, characterised in that the interactive system (36) can form all of or part of the charging sequence and can introduce it into the programmable unit (34), going by way of the central arithmetic unit (35).

Fig. 1

Fig.2

Fig.3

0 134 315

Fig. 4

3